# EUROPEAN PATENT APPLICATION

(11) **EP 2 261 862 A1**
(43) Date of publication of application: **15.12.2010**
(21) Application number: 10165356.6
(22) Date of filing: 09.06.2010
(51) Int. Cl.: G06T 15/00, G06T 15/50

(54) **Apparatus and method for hybrid rendering**

(30) Priority: 10.06.2009 KR 20090051283
(71) Applicant: Samsung Electronics Co., Ltd., Suwon-si Gyeonggi-do 443-742 (KR)
(72) Inventor: Ahn, Min Su, 446-712, Gyeonggi-do (KR); Kho, Young Ihn, 446-712, Gyeonggi-do (KR); Ha, In Woo, 446-712, Gyeonggi-do (KR); Ahn, Jeong Hwan, 443-706, Gyeonggi-do (KR)
(74) Representative: D'Halleweyn, Nele Veerle Trees Gertrudis

(57) **Abstract**

Disclosed is a hybrid and scalable rendering device and a method thereof. The hybrid and scalable rendering device may selectively apply at least one of rasterization rendering, a radiosity rendering, and a ray-tracing rendering, according to material properties of a target object for rendering, a distance between the target object and a give camera position, a capability of hardware, and the like.

## Description

This application claims the benefit of Korean Patent Application No. 10-2009-0051283, filed on June 10, 2009, in the Korean Intellectual Property Office.

The invention relates to a hybrid and scalable rendering device and a method thereof.

Rendering is a basic technology in a field of computer graphic, and various rendering schemes have been proposed.

A rasterization scheme, which is a most popular technology among rendering schemes, makes maximum use of a capability of computer graphics hardware. However, the rasterization scheme may only express a direct light. Also, a radiosity scheme may appropriately express a diffusion of a light and a soft shadow, and the like, but may have a limit to express a reflection, a refraction, and the like. Also, a ray-tracing may appropriately express the reflection, the refraction, and the like, but may have a limit to express the diffusion and the soft shadow.

Accordingly, there is need for a rendering device and method that may overcome the limit of conventional rendering schemes, maximize efficiency according to material properties, and is operational with various hardware.

This object is addressed by the device of independent claim 1 and the method of independent claim 10.

According to example embodiments, there may be provided a hybrid rendering device, including a determining unit to select a rendering scheme performing a three-dimensional (3D) rendering, a first rendering unit to perform the 3D rendering by expressing a direct light according to a first rendering scheme, a second rendering unit to perform the 3D rendering by expressing at least one of an indirect light and a shadow according to a second rendering scheme, and a third rendering unit to perform the 3D rendering by expressing at least one of a reflective light, a refractive light, and a diffractive light according to a third rendering scheme.

The determining unit may select the rendering scheme based on material properties of a target object.

Also, the determining unit may select the rendering scheme based on a capability of hardware.

Also, the first rendering scheme may be a rasterization rendering that performs rendering by converting vector data into a pixel pattern image.

Also, the second rendering scheme may be a radiosity rendering that performs rendering based on at least one of a light source, a light between objects, and a diffused light.

Also, the third rendering scheme may be a ray tracing rendering that performs rendering by tracing a route of a ray reflected from a surface of an object.

The determining unit may include a rendering scheme selecting unit to select at least one rendering scheme from among the first rendering scheme, the second rendering scheme, and the third rendering scheme, a first parameter adjusting unit to adjust a size of a patch or a sample point, and a number of patches or sample points for a radiosity rendering, and a second parameter adjusting unit to adjust a generation of a mask for ray tracing, a number of reflection bounces, and a number of refraction bounces.

The second parameter adjusting unit may include a mask generation adjusting unit to determine a pixel value of a the mask for the ray tracing, and a reflection number adjusting unit to adjust at least one of the number of reflection bounces and the number of refraction bounces.

The mask generation adjusting unit may set a pixel value of an area for generating a ray as a first set value, and may set a pixel value of an area where a ray is not generated as a second set value.

According to example embodiments, there may be provided a hybrid and scalable rendering method, including selecting a rendering scheme for performing a 3D rendering, expressing a direct light according to a first rendering scheme, expressing at least one of an indirect light and a soft shadow according to a second rendering scheme, and expressing at least one of a reflective light, and refractive light according to a third rendering scheme.

The first rendering scheme may be a rasterization rendering that performs rendering by converting a vector data into a pixel pattern image.

The second rendering scheme may be a radiosity rendering that performs rendering based on at least one of a light source, a light between objects, and a diffused light.

The selecting may include selecting at least one rendering scheme from among the first rendering scheme, the second rendering scheme, and the third rendering scheme, adjusting a size of a patch or a sample point, and a number of patches or sample points for a radiosity rendering scheme, and adjusting a generation of a mask for ray tracing, a number of reflection bounces, and a number of refraction bounces.

The adjusting of the generation of the mask, the number of reflection bounces, and the number of refraction bounces may include generating the mask by determining a pixel value of the mask for the ray tracing, and adjusting at least one of the number of reflection bounces and the number of refraction bounces.

The generating of the mask may include setting a pixel value of an area for generating a ray as a first set value, and setting a pixel value of an area where a ray is not generated as a second set value.

Additional aspects and/or advantages will be set forth in part in the description which follows and, in part, will be apparent from the description, or may be learned by practice of the embodiments.

These and/or other aspects and advantages will become apparent and more readily appreciated from the following description of the embodiments, taken in conjunction with the accompanying drawings of which:
FIG. 1 illustrates a hybrid rendering device according to example embodiments;
FIG. 2 illustrates a detailed configuration of a determining unit of the hybrid rendering device of FIG. 1;
FIG. 3 illustrates a process of performing hybrid rendering according to example embodiments;
FIG. 4 illustrates a radiosity rendering scheme according to example embodiments;
FIG. 5 illustrates a rasterization rendering scheme according to example embodiments;
FIG. 6 illustrates a ray-tracing rendering scheme according to example embodiments;
FIG. 7 illustrates a process of generating a mask for a ray-tracing according to example embodiments;
FIG. 8 illustrates an operational flowchart of a hybrid rendering method according to example embodiments;
FIG. 9 illustrates an operational flowchart of a process of selecting a rendering scheme of FIG. 8;
FIG. 10 illustrates an operational flowchart of a process of adjusting generation of a mask, a number of reflection bounces, and a number of refraction bounces of FIG. 9; and
FIG. 11 illustrates an operational flowchart of a process of generating a mask of FIG. 10.

Reference will now be made in detail to example embodiments, examples of which are illustrated in the accompanying drawings, wherein like reference numerals refer to the like elements throughout. Example embodiments are described below to explain the present disclosure by referring to the figures.

Embodiments of the invention pertain to a hybrid and scalable rendering device and a method thereof that selectively utilize a rendering scheme, for example according to material properties of a target object, a distance between the target object and a given camera position for rendering, a capability of hardware, and the like.

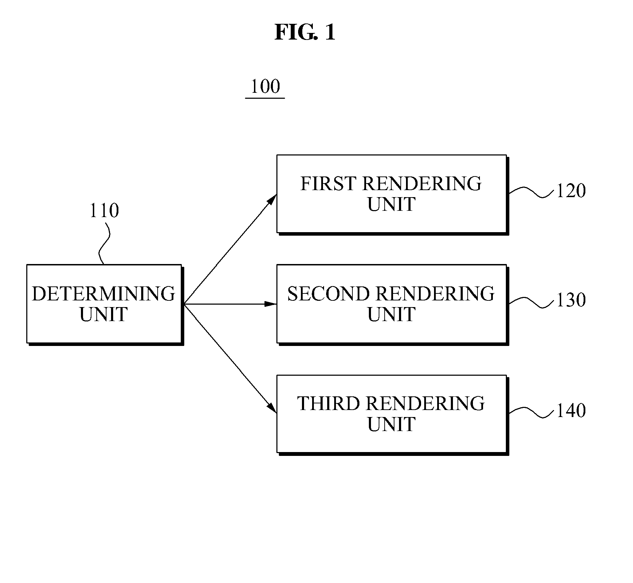

FIG. 1 illustrates a hybrid and scalable rendering device according to example embodiments.

Referring to FIG. 1, a hybrid and scalable rendering device 100 may include a determining unit 110, a first rendering unit 120, a second rendering unit 130, and a third rendering unit 140.

The determining unit 110 may select a rendering scheme for performing a three-dimensional (3D) rendering. In this instance, the determining unit 110 may select the rendering scheme based on material properties of a target object for rendering. As an example, whether a material of the target object for rendering requires a reflection, a refraction, and the like. Whether the material requires a diffusion of a light, and the like may be determined by extracting material properties of the target object for rendering. In this instance, when the target object requires the reflection, the refraction, and the like, the determining unit 110 may determine to perform a ray-tracing rendering. Also, when the target object requires the diffusion, the determining unit 110 may determine to perform a radiosity rendering.

Also, the determining unit may select the rendering scheme based on material properties of a target object and a distance between the target object and a given camera position for rendering.

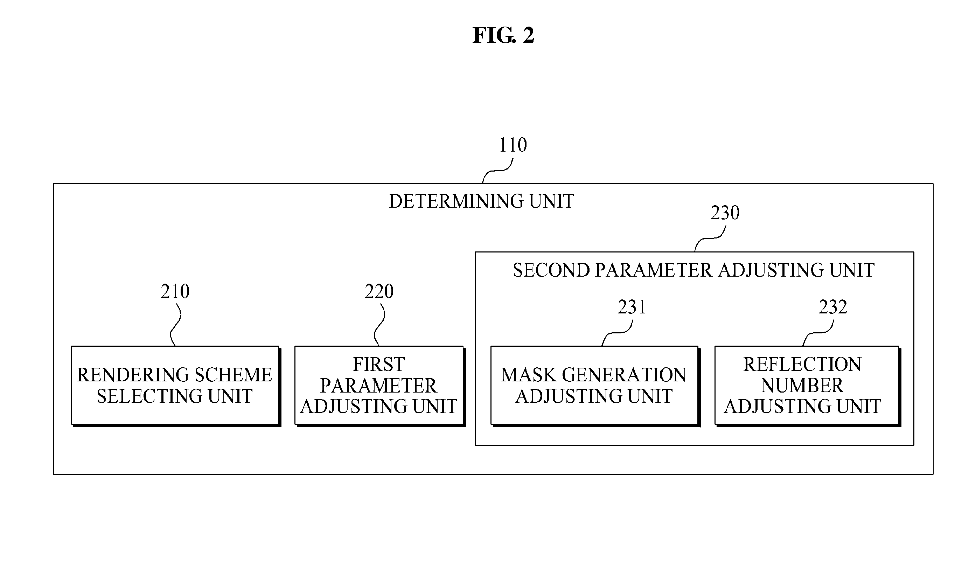

Also, the determining unit 110 may select the rendering scheme based on a capability of hardware. As an example, since the ray-tracing uses a great amount of hardware resources, the determining unit 110 may not perform the ray-tracing rendering in hardware having a low capability, but may perform at least one of a rasterization rendering or the radiosity rendering. Here, the determining unit 110 will be described in detail with reference to FIG. 2.

FIG. 2 illustrates a detailed configuration of the determining unit 110 of the hybrid rendering device of FIG. 1.

Referring to FIG. 2, the determining unit 110 may include a rendering scheme selecting unit 210, a first parameter adjusting unit 220, and a second parameter adjusting unit 230.

The rendering scheme selecting unit 210 may select at least one rendering scheme of a first rendering scheme, a second rendering scheme, and a third rendering scheme. That is, the rendering scheme selecting unit 210 may select at least one rendering scheme from among various rendering schemes according to a material of a target object for rendering, a capability of hardware, and the like.

The first parameter adjusting unit 220 may adjust a size of a patch and a sample point, and a number of patches and sample points for a radiosity rendering. That is, the first parameter adjusting unit 220 may adjust the size of the patch and the sample point, and the number of patches and sample points based on the capability of hardware and an input, thereby adjusting a rendering speed and an effect. In this instance, the patch and the sample point may be used for determining a color of the target object for rendering. Also, to determine a color of the patch or the sample point, a patch or a sample point that is relatively close to a visual point of a camera is calculated in detail, and a an amount of calculation with respect to a patch or a sample point that is relatively far from the visual point of the camera is reduced. Accordingly, rendering is performed without a difference in an image quality.

The second parameter adjusting unit 230 may adjust generation of a mask, a number of reflection bounces, and a number of refraction bounces. Here, the second parameter adjusting unit 230 may include a mask generation adjusting unit 231 and a refraction number adjusting unit 232.

The mask generation adjusting unit 231 may determine a pixel value of the mask for the ray-tracing. Here, the mask is for indicating an area where the ray-tracing is applicable. That is, the mask generation adjusting unit 231 may generate a mask indicating an area that requires a reflection, a refraction, and the like or an area that does not utilize the reflection, the refraction, and the like, since every area may not utilize the reflection, the refraction, and the like.

Also, the mask may be generated based on a distance between the visual point of the camera and an object, a coefficient of the reflection/reflection, an area that the object occupies in a screen, and the like, and thus, the rendering speed may be adjusted.

The reflection number adjusting unit 232 may adjust at least one of the number of reflection bounces and the number of refraction bounces. That is, the reflection number adjusting unit 232 may adjust the rendering speed by adjusting the number of reflection bounces and the number of refraction bounces based on the capability of hardware, and the like.

Referring again to FIG. 1, the first rendering unit 120 may perform the 3D rendering by expressing a direct light according to a first rendering scheme. Here, the first rendering scheme may be a rasterization rendering that performs rendering by converting vector data into a pixel pattern image. In this instance, the rasterization rendering may make maximum use of computer graphics hardware.

The second rendering unit 130 may perform the 3D rendering by expressing at least one of an indirect light and a soft shadow according to the second rendering scheme. Here, the second rendering scheme may be a radiosity rendering that may perform rendering based on at least one of a light source, a light between objects, and a diffused light, and a shadow. In this instance, the radiosity rendering may appropriately express a diffusion of light, a soft shadow, and the like.

The third rendering unit 140 may perform the 3D rendering by expressing at least one of a reflective light, a refractive light, and a diffractive light according to the third rendering scheme. Here, the third rendering scheme may be a ray-tracing rendering that may perform rendering by tracing a route of a ray reflected from a surface of an object. In this instance, the ray-tracing rendering may appropriately express the reflection of light, the refraction of light, and the like.

As described above, the rendering scheme may be selected based on at least one of the material of the target object for rendering and the capability of hardware, and thus, an efficiency of the rendering may be maximized and rendering may be performed effectively in various hardware environments.

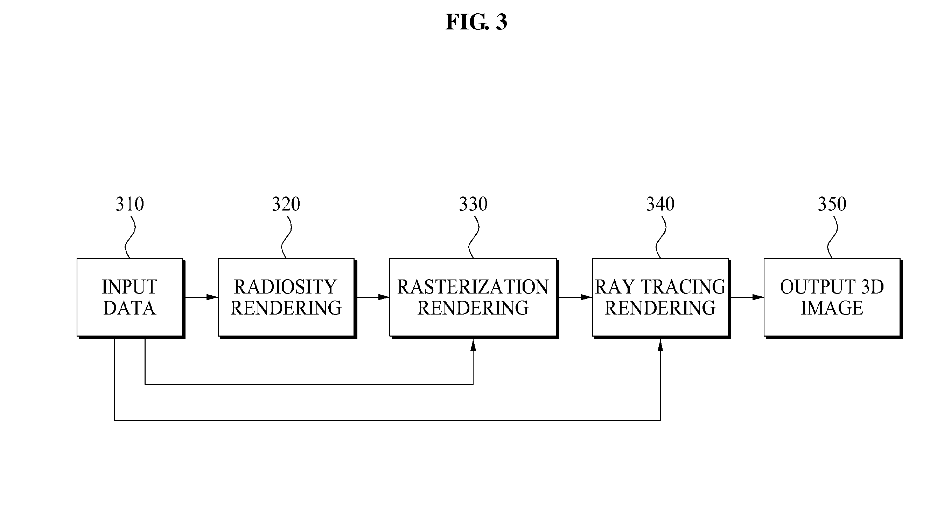

FIG. 3 illustrates a process of performing hybrid rendering according to example embodiments.

Referring to FIG. 3, a scene graph that is a group of objects constituting a scene and light information may be inputted as input data in operation 310.

In operation 320, a radiosity rendering that calculates an effect of a global illumination, such as a diffusion of a light, a soft shadow, and the like may be performed. Here, a patch or a sample point may be extracted from a surface of objects constituting a scene to perform the radiosity rendering, and a mutual effect the patch and the sample point may be simulated, and thus, a color of the patch and the sample point may be calculated.

In operation 330, each pixel value to be outputted on a screen may be stored in a frame buffer by performing the rasterization rendering by using color information of the extracted patch or sample point, a camera, and material information of the object.

In operation 340, in performing the ray tracing rendering, the effect of the global illumination, such as the reflection of light, the refraction, and the like may be calculated, and the stored color value of the frame buffer in operation 320 may be updated by using a color value obtained from the calculation.

In operation 350, a 3D output image where the refraction and the reflection of light are reflected may be finally generated based on the updated value.

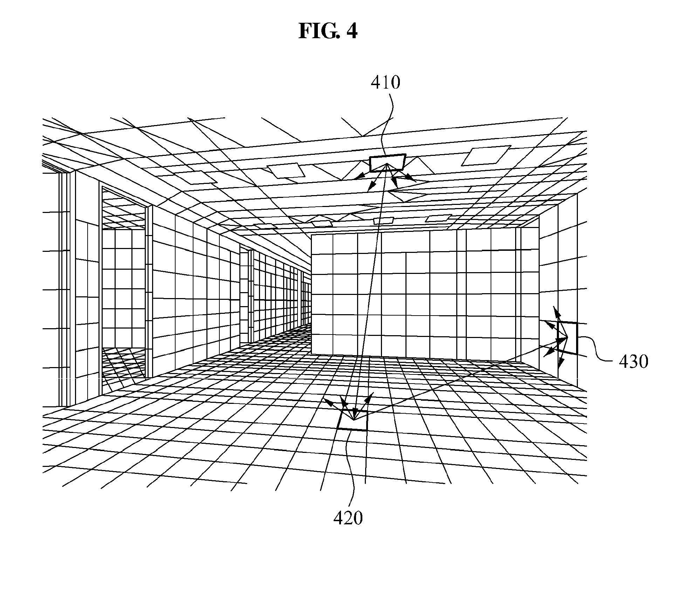

FIG. 4 illustrates a radiosity rendering scheme according to example embodiments.

Referring to FIG. 4, the radiosity rendering may split an entire surface into small pieces 410, 420, 430, based on a distribution of an amount of light, or may extract a sample point from the surface, to calculate an effect of a light that is exchanged between objects, a diffused light, and the like, as well as a light from a light source. That is, the entire surface constituting a scene is divided into pieces 410, 420, and 430 that are referred to as patches, and an amount of a light energy that is transferred from a light source to a first patch, then from the first patch to a second patch, and then from the second patch to a third patch, may be calculated.

In this instance, for example, when the radiosity rendering is applied to a scene constituted by a wide white wall and a red and blue floor, the white wall may represent red due to an effect of a diffused light reflected from the red floor.

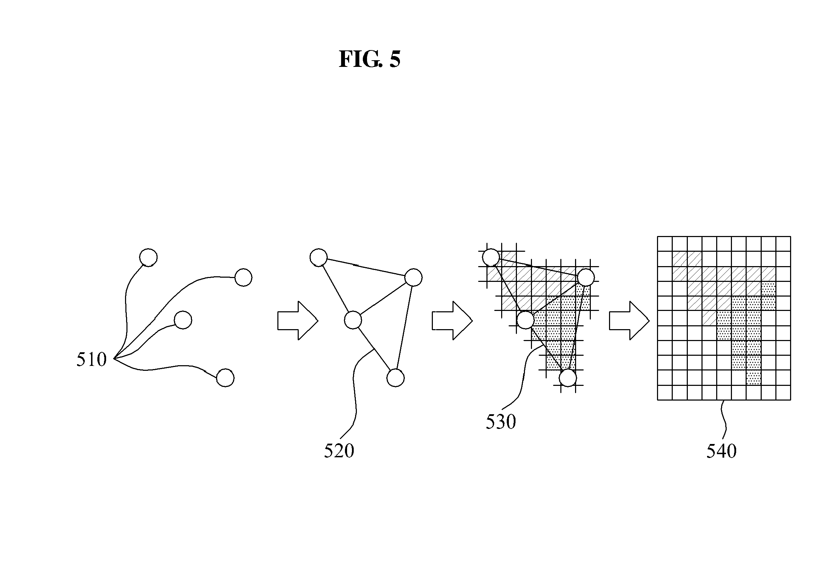

FIG. 5 illustrates a rasterization rendering scheme according to example embodiments.

Referring to FIG. 5, a set of triangles 520 may be formed from a definite point 510 that has a 3D location and a color, and the set of triangles 520 may be converted into pixels 530 and 540 of a graphic hardware frame buffer. However, the rasterization rendering may use graphic hardware acceleration and may have difficulty in expressing a global illumination, such as a reflection, a refraction, an indirection light, and the like.

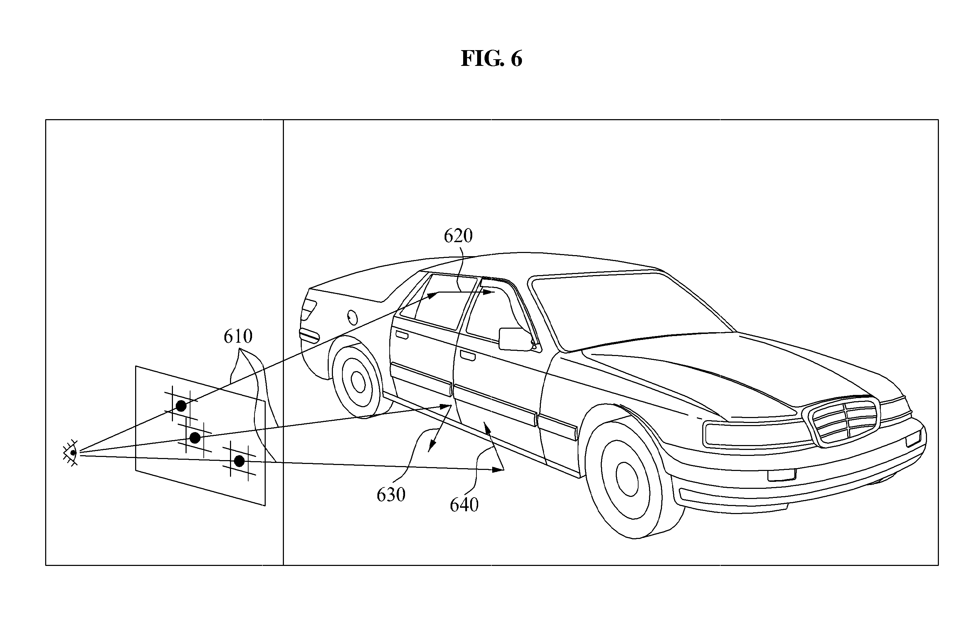

FIG. 6 illustrates a ray-tracing rendering scheme according to example embodiments.

Referring to FIG. 6, the ray-tracing rendering may be a scheme of calculating a visible object and an illumination of a visible point by transmitting a ray in a direction of each pixel in a screen from a visual point. In this instance, a primary ray 610 transmitted from the visual point may perform recursive generation of a shadow ray 640 for calculating whether a shadow is included at a time of when the ray meets an object, a reflection ray 630 for obtaining a reflected image when the object has a reflection surface, a refraction ray 620 for obtaining a refracted image when the object has a refraction surface, and the like. The ray-tracing rendering may appropriately express a global illumination such as the reflection, the refraction, and the like. However, there may be difficulty in utilizing the ray-tracing in a real-time rendering since the ray-tracing requires a great amount of calculation. Also, when a diffusion of a light and a soft shadow are expressed, a number of required rays rapidly increases, thereby increasing an amount of calculation.

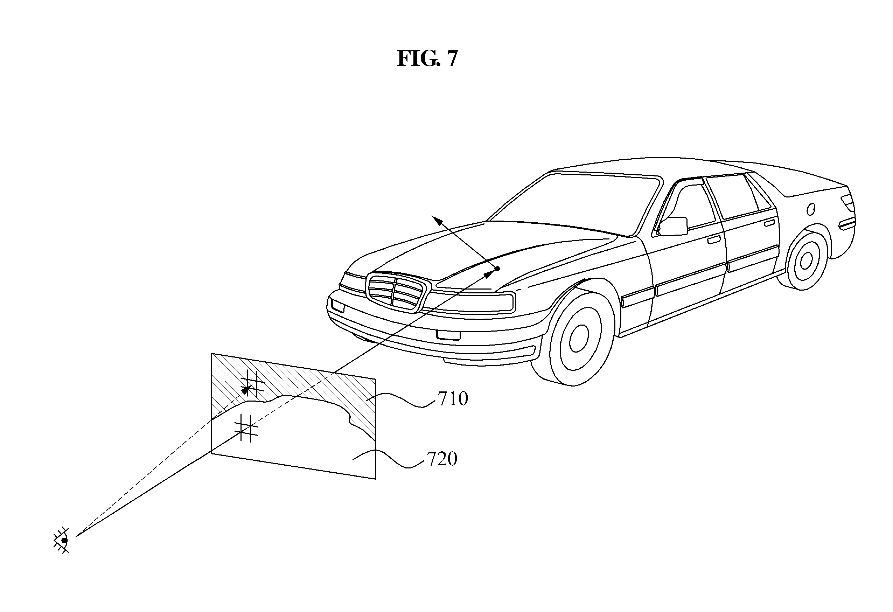

FIG. 7 illustrates a process of generating a mask for a ray-tracing according to example embodiments.

Referring to FIG. 7, the mask may have a same resolution as a screen, and may indicate an area 720 where the ray-tracing rendering is used and an area 710 where the ray-tracing rendering is not used. As an example, when a pixel has a value of a predetermined area in the mask and the value is not zero, a ray may be generated with respect to the pixel, and the ray-tracing may be performed with respect to the pixel. Here, the mask may be generated based on a unit of an object that constitutes a scene, and may also be generated based on a reflection coefficient and a refraction coefficient of the object.

As an example, when the reflection coefficient and the refraction coefficient of a material of the object is less than a predetermined value, a pixel value of an area where the object is drawn may be set to zero. Also, when the object is more distant from the visual point than a predetermined value, the pixel value of the area where the object is drawn may be set to zero. Also, the area where the object is drawn is less than a predetermined value, the pixel value of the area where the object is drawn is set to zero.

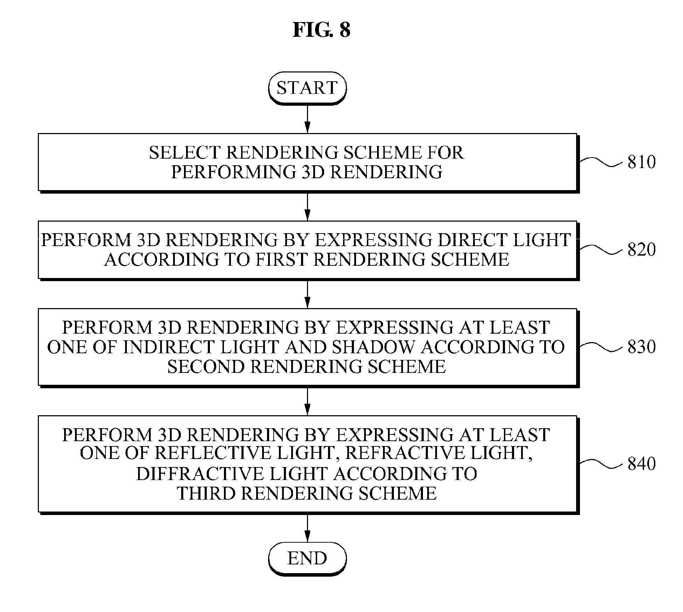

FIG. 8 illustrates an operational flowchart of a hybrid and scalable rendering method according to example embodiments.

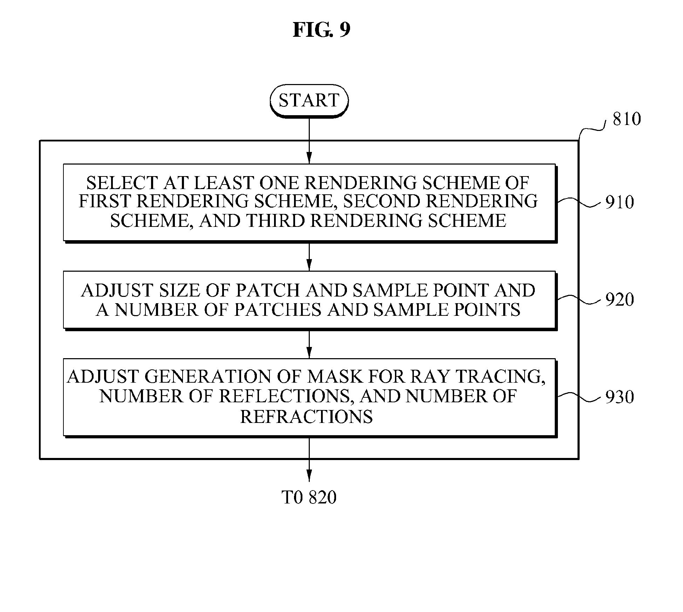

Referring to FIG. 8, in operation 810, a rendering scheme for performing a 3D rendering may be selected. As an example, the rendering scheme may be determined based on material properties and the distance from a given camera of a target object for rendering, a capability of hardware, and the like. Here, the material properties of the target object for rendering may include whether the target object for rendering uses a reflection, a refraction, and the like, and may include whether the target object for rendering uses expression of an indirect light. Here, operation 810 will be described in detail with reference to FIG. 9.

The selecting may select the rendering scheme based on material properties of a target object for rendering. The selecting may select the rendering scheme based on a capability of hardware. The first rendering scheme may be a rasterization rendering that performs rendering by converting a vector data into a pixel pattern image. The second rendering scheme may be a radiosity rendering that performs rendering based on at least one of a light source, a light between objects, and a diffused light. The third rendering scheme may be a ray-tracing rendering that performs rendering by tracing a route of a ray reflected from a surface of an object.

FIG. 9 illustrates an operational flowchart of a process of selecting a rendering scheme of FIG. 8.

Referring to FIG. 9, at least one rendering scheme of a first rendering scheme, a second rendering scheme, and a third rendering scheme may be selected in operation 910. Here, the first rendering may be a rasterization rendering, and the second rendering scheme may be a radiosity rendering, and the third rendering scheme may be a ray-tracing rendering.

In operation 920, a size of a patch or a sample point, and a number of patches or sample points may be adjusted. In this instance, the patch or the sample point may be used for performing the radiosity rendering. Therefore, the patch or the sample point which is close to a visual point of a camera may be calculated in detail, and an amount of calculation with respect to the patch or the sample point which is distant from the visual point may be reduced.

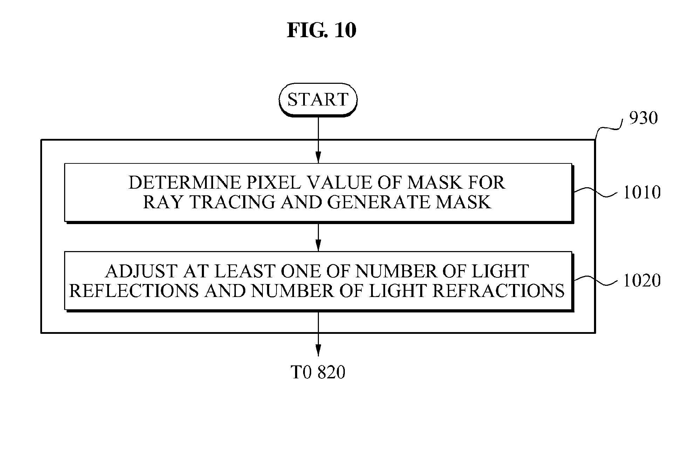

In operation 930, generation of a mask for the ray-tracing, a number of reflection bounces, and a number of refraction bounces may be adjusted. Here, operation 930 will be described in detail with reference to FIG. 10.

FIG. 10 illustrates an operational flowchart of a process of adjusting generation of a mask, a number of reflection bounces, and a number of refraction bounces of FIG. 9.

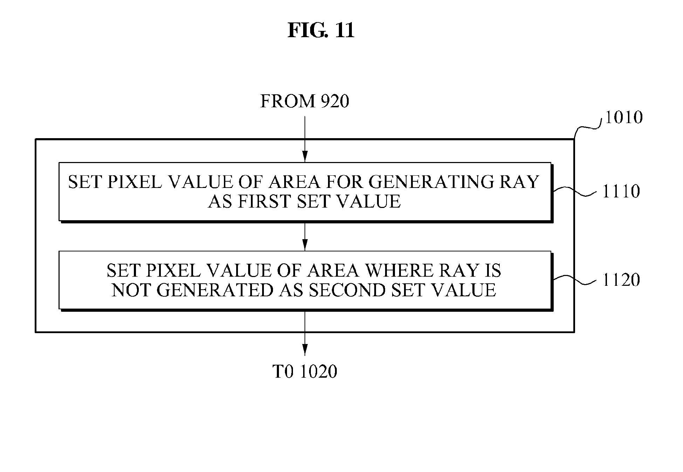

Referring to FIG. 10, the mask may be generated by determining a pixel value of the mask for the ray-tracing in operation 1010. In this instance, a pixel value of an area where the ray-tracing is performed may be set to be different from a pixel value of an area where the ray-tracing is not performed. The generation of the mask will be described in detail with reference to FIG. 11.

FIG. 11 illustrates an operational flowchart of a process of generating a mask of FIG. 10.

Referring to FIG. 11, a pixel value of an area for generating a ray is set as a first set value in operation 1110. In this instance, the first set value may be a random value being greater than zero.

In operation 1120, a pixel value of an area where a ray is not generated is set as a second set value. In this instance, the second set value may be zero.

Accordingly, the first set value and the second set value are different from each other, and whether the ray-tracing rendering is used during the rendering may be determined based on the first set value and the second set value.

Referring again to FIG. 10, at least one of the number of reflection bounces and the number of refraction bounces may be adjusted in operation 1020. The number of reflection bounces and the number of refraction bounces may be adjusted based on a capability of hardware. Also, the number of the reflection bounces and the number of refraction bounces may be set to be high where the capability of the hardware is high, and thus, an excellent 3D effect may be expressed.

Referring again to FIG. 8, the 3D rendering may be performed by expressing a direct light according to the first rendering scheme in operation 820. In this instance, the first rendering scheme may be a rasterization rendering.

In operation 830, the 3D rendering may be performed by expressing at least one of an indirect light and a soft shadow, according to the second rendering scheme. In this instance, the second rendering scheme may be a radiosity rendering.

In operation 840, the 3D rendering may be performed by expressing at least one of a reflective light, a refractive light, and a diffractive light, according to the third rendering scheme. In this instance, the third rendering scheme may be the ray-tracing rendering.

In this instance, the first rendering scheme, the second rendering scheme, and the third rendering scheme may be selectively applied to perform the 3D rendering.

As described above, at least one rendering scheme is selectively applied based on material properties of a target object for rendering, thereby making maximum use of an advantage of each rendering scheme and maximizing an efficiency of the rendering.

Also, the rendering scheme is applied based on the capability of the rendering scheme, thereby adjusting a rendering speed and an effect and performing of rendering optimal for the capability of the hardware.

The hybrid and scalable rendering method according to the exemplary embodiments may also be implemented through computer readable code/instructions in/on a medium, e.g., a computer readable medium, to control at least one processing element to implement any above described embodiment. The medium can correspond to any medium/media permitting the storing and/or transmission of the computer readable code.

The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media such as media carrying or including elements of the Internet, for example. Thus, the medium may be such a defined and measurable structure including or carrying a signal or information, such as a device carrying a bitstream, for example, according to embodiments of the present invention. The media may also be a distributed network, so that the computer readable code is stored/transferred and executed in a distributed fashion. Still further, as only an example, the processing element could include a processor or a computer processor, and processing elements may be distributed and/or included in a single device.

Although a few example embodiments have been shown and described, it would be appreciated by those skilled in the art that changes may be made in these example embodiments without departing from the principles of the invention, the scope of which is defined in the claims and their equivalents.

## Claims

1. A hybrid rendering device (100), comprising:
a determining unit (110) adapted to select a rendering scheme performing a three-dimensional (3D) rendering;
a first rendering unit (120) adapted to perform the 3D rendering by expressing a direct light according to a first rendering scheme;
a second rendering unit (130) adapted to perform the 3D rendering by expressing at least one of an indirect light and a shadow according to a second rendering scheme; and
a third rendering unit (140) adapted to perform the 3D rendering by expressing at least one of a reflective light, a refractive light, and a diffractive light according to a third rendering scheme.

2. The device of claim 1, wherein the determining unit (110) is apdated to select the rendering scheme based on material properties of a target object for rendering.

3. The device of claim 1 or claim 2, wherein the determining unit (110) is adapted to select the rendering scheme based on a capability of hardware.

4. The device of any of the preceding claims, wherein the first rendering scheme is a rasterization rendering that performs rendering by converting vector data into a pixel pattern image.

5. The device of any of the preceding claims, wherein the second rendering scheme is a radiosity rendering that performs rendering based on at least one of a light source, a light between objects, and a diffused light.

6. The device of any of the preceding claims, wherein the third rendering scheme is a ray tracing rendering that performs rendering by tracing a route of a ray reflected from a surface of an object.

7. The device of any of the preceding claims, wherein the determining unit (110) comprises:
a rendering scheme selecting unit (210) adapted to select at least one rendering scheme from among the first rendering scheme, the second rendering scheme, and the third rendering scheme;
a first parameter adjusting unit (220) adapted to adjust a size of a patch or a sample point, and a number of patches or sample points for a radiosity rendering; and
a second parameter adjusting unit (230) adapted to adjust a generation of a mask for ray tracing, a number of reflection bounces, and a number of refraction bounces.

8. The device of claim 7, wherein the second parameter adjusting unit (230) comprises:
a mask generation adjusting unit (231) adapted to determine a pixel value of the mask for the ray tracing; and
a reflection number adjusting unit (232) adapted to adjust at least one of the number of reflection bounces and the number of refraction bounces.

9. The device of claim 8, wherein the mask generation adjusting unit (231) is adapted to set a pixel value of an area for generating a ray as a first set value, and to set a pixel value of an area where a ray is not generated as a second set value.

10. A hybrid rendering method, comprising:
selecting (810) a rendering scheme for performing a 3D rendering;
expressing (820) a direct light according to a first rendering scheme;
expressing (830) at least one of an indirect light and a soft shadow according to a second rendering scheme; and
expressing (840) at least one of a reflective light, and a refractive light according to a third rendering scheme.

11. The method of claim 10, wherein the first rendering scheme is a rasterization rendering that performs rendering by converting a vector data into a pixel pattern image.

12. The method of claim 10 or claim 11, wherein the second rendering scheme is a radiosity rendering that performs rendering based on at least one of a light source, a light between objects, and a diffused light.

13. The method of any of claims 10-12, wherein the selecting (810) comprises:
selecting (910) at least one rendering scheme from among the first rendering scheme, the second rendering scheme, and the third rendering scheme;
adjusting (920) a size of a patch or a sample point, and a number of patches or sample points for a radiosity rendering scheme; and
adjusting (930) a generation of a mask for ray tracing, a number of reflection bounces, and a number of refraction bounces.

14. The method of claim 13, wherein the adjusting (930) of the generation of the mask, the number of reflection bounces, and the number of refraction bounces comprises:
generating (1010) the mask by determining a pixel value of the mask for the ray tracing; and
adjusting (1020) at least one of the number of light reflections and the number of light refractions.

15. The method of claim 14, wherein the generating (1010) of the mask comprises:
setting (1110) a pixel value of an area for generating a ray as a first set value; and
setting (1120) a pixel value of an area where a ray is not generated as a second set value.
